Europäisches Patentamt

European Patent Office

Office européen des brevets

(11) Veröffentlichungsnummer: **0 191 012**
**B1**

(12) **EUROPÄISCHE PATENTSCHRIFT**

(45) Veröffentlichungstag der Patentschrift:
20.12.89

(51) Int. Cl.⁴: **F 02 B 77/13,** F 01 P 11/12,
B 60 R 13/08

(21) Anmeldenummer: 86890018.4

(22) Anmeldetag: 03.02.86

(54) **Gekapselte Brennkraftmaschine zum Antrieb von Kraftfahrzeugen.**

(30) Priorität: 08.02.85 AT 373/85

(43) Veröffentlichungstag der Anmeldung:
13.08.86 Patentblatt 86/33

(45) Bekanntmachung des Hinweises auf die Patenterteilung:
20.12.89 Patentblatt 89/51

(84) Benannte Vertragsstaaten:
DE FR GB IT SE

(56) Entgegenhaltungen:
EP-A- 0 084 868
AT-B- 375 443
DE-A- 3 345 171
DE-A- 3 414 609

(73) Patentinhaber: AVL Gesellschaft für
Verbrennungskraftmaschinen und Messtechnik
mbH.Prof.Dr.Dr.h.c. Hans List, Kleiststrasse 48,
A-8020 Graz (AT)

(72) Erfinder: Kirchweger, Karl, Stiftingtalstrasse 71,
A-8010 Graz (AT)
Erfinder: Killmann, Irolt, Dr., Dipl.-Ing., Am Rehgrund 20,
A-8043 Graz (AT)
Erfinder: Knopf, Franz, Papiermühlgasse 19/9,
A-8020 Graz (AT)

(74) Vertreter: Krause, Walter, Dr. Dipl.-Ing.,
Postfach 200 Singerstrasse 8, A-1010 Wien (AT)

## Beschreibung

Die Erfindung bezieht sich auf eine gekapselte Brennkraftmaschine zum Antrieb von Kraftfahrzeugen, mit einer Kapsel, die eine als Luftleitwand ausgebildete Kapselvorderwand und eine Kapselumfangswand umfasst, und einem Wasserkühler mit einem als Axialgebläse ausgebildeten, ausserhalb der Kapsel und vor der Kapselvorderwand angeordneten Lüfter, wobei zwischen dem äusseren Umfang der Kapselvorderwand und der Kapselumfangswand ein Ringspalt für den Lufteintritt in der Kapsel gebildet ist und wobei nur ein Teil der vom Lüfter geförderten Kühlluft die Kapsel durchströmt.

Nach der AT-PS 350 331 ist eine Brennkraftmaschine der eingangs genannten Art bekannt, die sich zusammen mit dem Getriebe in einer Tunnelkapsel befindet, welche zur stirnseitigen Luftübertrittsöffnung sich halsartig verengend zum Lüfter vorgezogen ist und Luft aus dem Bereich der Lüfternabe einströmen lässt. Diese Luft strömt an der Brennkraftmaschine und am Getriebe vorbei und tritt beim Ende des Getriebes wieder aus, wobei hier der geringe Durchmesser der Austrittsöffnung im Verein mit einer Schallabsorptionsauskleidung eine gute Schalldämpfung bewirkt. Um die Strömungsverluste im Kapselinneren zu verringern, ist die Brennkraftmaschinenkapsel innen mit einer in den die Luftübertrittsöffnung bildenden Hals vorragenden etwa der Halsform angepassten Luftleitwand versehen. Nachteilig bei dieser Ausführungsart ist die relativ grosse Gesamtbaulänge der Brennkraftmaschine, sowie die Schallemission nach vorne, die durch die Luftleitwand und den Kühler nur in geringem Umfang verringert werden kann.

Nach der DE-OS 2 703 227 und der DE-OS 2 403 254 ist es bekannt, zur Verringerung der Schallemission in Fahrtrichtung vor dem Kühler verschieden geformte Schalldämpfer anzubringen, die jedoch, je wirksamer sie sein sollen, umso grösser gebaut werden müssen. Der Leistungsaufwand für die Förderung der Kühlluft, der durch die Tunnelkapsel an sich schon erhöht ist, wird durch diesen Schalldämpfer weiter gesteigert, u.zw. umso mehr, je mehr man versucht, Gewicht und Grösse zu sparen.

Aufgabe der Erfindung ist es, eine gute geräuschmindernde Wirkung der Kapsel auch nach vorne mit geringem konstruktiven Aufwand zu erreichen und gleichzeitig dafür zu sorgen, dass bei geringem Energieaufwand für den Lüfter eine ausreichende Kühlung der Kapsel erreicht wird.

Diese Aufgabe wird erfindungsgemäss dadurch gelöst, dass die Kapselvorderwand im wesentlichen in einer Normalebene zur Lüfterachse liegt und über elastische Elemente an der Brennkraftmaschine befestigt ist und dass im Bereich des Ringspaltes auf der Kapselumfangswand und/oder Kapselvorderwand schallabsorbierendes Material aufgebracht ist. Dadurch werden Teile, bzw. Flächen, die besonders nach vorne Geräusche abstrahlen, an der Schallemission gehindert, ohne dass für die Kühlluftströmung ein zusätzlicher Widerstand geschaffen wird. Die elastische Anbringung verhindert, dass die Luftleitwand durch die Brennkraftmaschine zu Schwingungen angeregt und somit selbst zu einem Schallsender wird. Die Anbringung der Wand direkt an der Brennkraftmaschine ermöglicht den knappsten Abstand zu dieser, da keine Motorbewegung und geringere Toleranzen zu berücksichtigen sind, als wenn diese Wand an der Karosserie befestigt wäre. Dadurch geht kein Raum für die Kühlluftströmung vor der Brennkraftmaschine verloren. Ist ein mechanisch von der Brennkraftmaschine angetriebener Lüfter vorhanden, so gelingt es wesentlich leichter als bei einer an der Karosserie befestigten Wand einen möglichst schalldichten Durchtritt zu schaffen, da man kleinste Spalte vorsehen kann.

Die elastisch aufgehängte Kapselvorderwand reicht bis in die Nähe der Kapselumfangswand. Dazwischen bleibt ein Spalt, durch den die vom Kühler kommende Luft in die Kapsel eintritt. Die Kapselumfangswand braucht nun nicht mehr bis zum Kühler vorgezogen werden, um die Schallaustrittsfläche möglichst gering zu halten. Man kann ausserdem nur einen Teil der Kühlluft dem Kapselinnenraum zuführen, um an Lüfterleistung zu sparen.

Der Lüfter kann, wie dies häufig zur Vermeidung von Drehschwingungen notwendig ist, mit einem elastischen Element mit der Brennkraftmaschine verbunden sein, um nicht selbst den Körperschall abzustrahlen, den er vom Motor erhält.

Besonders vorteilhaft ist es, wenn in weiterer Ausgestaltung der Erfindung, im Bereich des Ringspaltes auf der Kapselumfangswand und/oder der Kapselvorderwand schallabsorbierendes Material aufgebracht ist. Durch diese Massnahme wird der Schallaustritt in Fahrtrichtung weiter vermindert, wobei das Absorptionsmaterial bei ausgebauter Kapselvorderwand einfach aufbringbar ist.

Nach einer vorteilhaften Weiterbildung der Erfindung ist vorgesehen, dass die Kapselvorderwand in einer die Achse des Axiallüfters enthaltenden Ebene geteilt ist. Dadurch kann die Kapselvorderwand, insbesondere für Wartungszwecke, leicht demontiert werden.

Schliesslich kann gemäss einer weiteren Ausgestaltung der Erfindung vorgesehen sein, dass der Ringspalt von Kühlwasserleitungen der Brennkraftmaschine und/oder von Kanälen, mittels derer in bekannter Weise vom Kühler nicht erwärmte Luft besonders zu kühlenden Bauteilen zuführbar ist, durchsetzt ist. Die Kühlwasserleitungen zum und vom Kühler können somit ohne eigene Durchlässe durch diesen Spalt geführt werden, so dass die Montage und Demontage von Wand und Leitungen voneinander unabhängig und einfach wird und keine weiteren Bauelemente nötig sind. Gleiches gilt für Kanäle, die relativ kleine Luftmengen vorzugsweise durch Staudruck aber auch Gebläsewirkung am Kühler vorbei zu Stellen leiten, die spezieller Kühlung bedürfen, wie z.B. die Lichtmaschine.

Die Erfindung wird im folgenden anhand von Zeichnungen näher erläutert. Es zeigen

Fig. 1 schematisch eine erste Ausführungsform einer erfindungsgemässen Brennkraftmaschine mit in Längsschnitt dargestellter Kapsel, die

Fig. 2 dazu eine Vorderansicht bei ausgebautem Kühler und Lüfter mit nach der Linie II–II in Fig. 1 geschnittener Kapsel und

Fig. 3 eine zweite Ausführungsform in gleicher Darstellung wie Fig. 1.

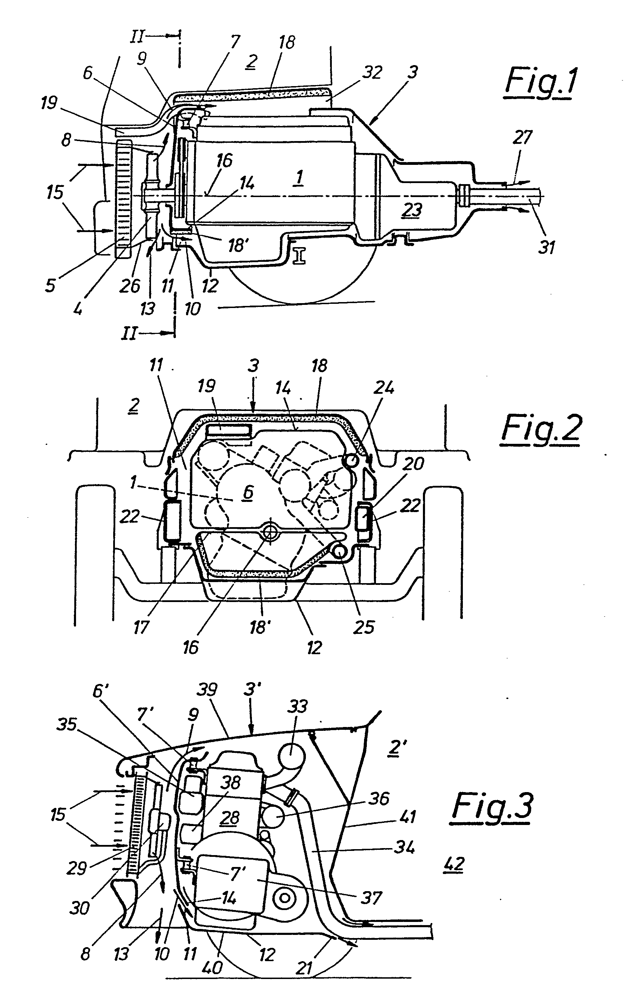

In Fig. 1 ist eine Brennkraftmaschine 1 zum Antrieb eines Kraftfahrzeuges 2 dargestellt, die sich zusammen mit dem Getriebe 23 in einer schalldämmenden Kapsel 3 befindet. Die für die Kühlung der Kapsel 3 benötigte Luft wird durch den Axiallüfter 4, wie durch die Pfeile 15 angedeutet, durch den Wasserkühler 5 gefördert, wobei ein Leitblech 26 für die seitliche Begrenzung des Luftstromes vorgesehen ist. Direkt hinter dem Axiallüfter 4 befindet sich die Kapselvorderwand 6, die durch elastische Elemente 7 an der Brennkraftmaschine 1 befestigt ist. Die aus dem Axiallüfter 4 austretende Luft wird entsprechend den Pfeilen 8 durch die Kapselvorderwand 6 umgelenkt, so dass ein Teil der Kühlluft entsprechend den Pfeilen 9, 10 durch den Ringspalt 11 zwischen der Kapselumfangswand 12 und der Kapselvorderwand 6 in das Innere der Kapsel 3 gelangt, wobei der Rest der Kühlluft, wie Pfeil 13 andeutet, an der Kapsel 3 vorbeiströmt. Der Ringspalt 11 erstreckt sich entlang des beliebig geformten Umfanges 14 der Kapselvorderwand 6, wobei die Breite des Spaltes 11, speziell an Stellen, wo beispielsweise Kühlwasserleitungen diesen durchsetzen, variieren kann. Die Kühlluft durchströmt die Kapsel 3 und tritt teilweise durch eine Öffnung 32 an der hinteren Kapseloberseite und teilweise nach Kühlung des Getriebes 23, wie die Pfeile 27 zeigen, aus dem Ringspalt zwischen Kardanwelle 31 und Kapselumfangswand 12 aus.

Zur besonderen Schallabdichtung ist am äusseren Umfang 14 der Kapselvorderwand 6 schallabsorbierendes Material 18' im Bereich des Ringspaltes 11 aufgebracht. Wenn zweckmässig, kann Absorptionsmaterial 18 auch an der Kapselumfangswand 12 und – hier nicht dargestellt – im Bereich des Kühlluftaustritts im Ringspalt zur Kardanwelle 31 aufgebracht sein. Es ist auch denkbar, Abschnitte des Ringspaltes 11, wie hier nicht dargestellt, durch entsprechend elastisches die Relativbewegungen der Kapselvorderwand 6 zur Kapselumfangswand 12 nicht behinderndes schallabsorbierendes Material ganz zu verschliessen, wenn durch verbleibende offene Abschnitte eine ausreichende Kühlung der Kapsel 3 gewährleistet ist.

Aus der Fig. 2 ist ersichtlich, dass die Kapselvorderwand 6 geteilt ausgeführt sein kann. Aus Gründen der einfacheren Montage bzw. Wartung der Brennkraftmaschine, ist eine Teilung nach einer Ebene 17 vorteilhaft, in der auch die Achse 16 des Lüfters 4 liegt. Der Ringspalt 11 kann auch Kühlwasserleitungen 24, 25 aufnehmen, wodurch gesondert anzubringende Durchführungen durch die Kapsel 3 entfallen. Für die Durchführung von Kanälen 19, 20, die zur Zuführung von Kühlluft verwendet werden, die am Kühler 5 vorbeigeführt wird und besonders intensiv zu kühlenden Teilen der Brennkraftmaschine 1 zugeleitet wird, eignet sich ebenfalls der Ringspalt 11. Diese Kanäle 19, 20 können, zumindest teilweise, in tragenden Fahrzeugteilen, beispielsweise dem Fahrzeugrahmen 22, der zum Aufbau der Kapsel 3 beiträgt, angebracht sein. Nicht erwärmte Luft kann durch den Staudruck oder durch hier nicht dargestellte Gebläse gefördert werden.

Die Fig. 3 zeigt die Anwendung der erfindungsgemässen Kapselvorderwand 6' bei einem Personenkraftwagen 2' mit quer eingebauter Brennkraftmaschine 28, wobei weitere Teile des Motors, wie Einspritzpumpe 35, Ölfilter 38 und Getriebe 37, ebenfalls durch die Kapselvorderwand 6' an der Schallemission gehindert werden. Zur Vollständigkeit sind noch die Lichtmaschine 36 und das Luftfilter 33 dargestellt.

Die mittels elastischer Elemente 7' aufgehängte Kapselvorderwand 6' kann sehr knapp an der Brennkraftmaschine 28 angeordnet werden, da sie die relativ grossen Querbewegungen der Brennkraftmaschine beim Anlassen und Abstellen sowie Bremsen mitmacht. Auf diese Weise sind genügend grosse Querschnitte für die Kühlluftabströmung vorhanden und der Schallabschirmeffekt ist möglichst gross. Die schallabsorbierende Kapsel 3' wird hier weitgehend durch Karosserieteile des Fahrzeuges 2', wie Motorhaube 39, Bodenplatte 40, Trennwand 41 zum Fahrgastraum 42 und hier nicht dargestellten Seitenteilen der Karosserie, gebildet. Die vom Lüfter 30, dessen Achse in diesem Fall die Kapselvorderwand 6' nicht durchsetzt, geförderte Kühlluft wird nach dem Durchtritt durch den Kühler 29, wie bei der in Fig. 1 und 2 beschriebenen Ausführungsform gemäss den Pfeilen 8 durch die Kapselvorderwand 6' umgelenkt und tritt nach den Pfeilen 9, 10 durch den Ringspalt 11 zwischen Kapselumfangswand 12 und Umfang 14 der Kapselvorderwand 6' in die Kapsel 3' ein. Die erwärmte Kühlluft tritt durch die Öffnung 21 aus der Kapsel 3' aus, die auch das Auspuffrohr 34 durchsetzt. Eine beliebige Teilung der Kapselvorderwand 6', um einzelne Teile der Brennkraftmaschine 28 besser warten zu können, sowie die Anbringung von schallabsorbierendem Material im Bereich des Ringspaltes 11, ist auch bei dieser Anwendung der Erfindung auf einfache Weise möglich.

Da bei freiem Ausblasen aus dem Axiallüfter 4 bzw. 30 die Luft radial ausströmt, entsteht in Zusammenwirkung mit der knapp dahinterliegenden Kapselvorderwand 6 bzw. 6' ein Plattendiffusor, der bei beiden Ausführungsformen den Wirkungsgrad des Lüfters verbessert.

**Patentansprüche**

1. Gekapselte Brennkraftmaschine (1, 28) zum Antrieb von Kraftfahrzeugen, mit einer Kapsel (3;

3'), die eine als Luftleitwand ausgebildete Kapselvorderwand (6; 6') und eine Kapselumfangswand (12) umfasst, und einem Wasserkühler (5) mit einem als Axialgebläse ausgebildeten, ausserhalb der Kapsel (3; 3') und vor der Kapselvorderwand (6; 6') angeordneten Lüfter (4; 30), wobei zwischen dem äusseren Umfang (14) der Kapselvorderwand (6; 6') und der Kapselumfangswand (12) ein Ringspalt (11) für den Lufteintritt in der Kapsel (3, 3') gebildet ist und wobei nur ein Teil der vom Lüfter (4; 30) geförderten Kühlluft die Kapsel (3; 3') durchströmt, dadurch gekennzeichnet, dass die Kapselvorderwand (6, 6') im wesentlichen in einer Normalebene zur Lüfterachse (16) liegt und über elastische Elemente (7, 7') an der Brennkraftmaschine (1; 28) befestigt ist und dass im Bereich des Ringspaltes (11) auf der Kapselumfangswand (12) und/oder Kapselvorderwand (6; 6') schallabsorbierendes Material (18, 18') aufgebracht ist.

2. Gekapselte Brennkraftmaschine nach Anspruch 1, dadurch gekennzeichnet, dass die Kapselvorderwand (6) in einer die Achse (16) des Axiallüfters (14) enthaltenden Ebene (17) geteilt ist (Fig. 1 und 2).

3. Gekapselte Brennkraftmaschine nach Anspruch 1 oder 2, dadurch gekennzeichnet, dass der Ringspalt (11) von Kühlwasserleitungen (24, 25) der Brennkraftmaschine (1) und/oder von Kanälen (19, 20), mittels derer in bekannter Weise vom Kühler (5) nicht erwärmte Luft besonders zu kühlenden Bauteilen zuführbar ist, durchsetzt ist.

**Revendications**

1. Moteur à combustion interne encapsulé (1, 28) pour l'entraînement d'un véhicule automobile, comportant une capsule (3, 3') qui se compose d'une paroi avant de capsule (6, 6') en fome de paroi de guidage d'air et d'une paroi périphérique de capsule (12), ainsi qu'un radiateur à eau (5) avec un ventilateur (4, 30) en forme de machine soufflante axiale, à l'extérieur de la capsule (3, 3') et en avant de la paroi avant (6, 6') de la capsule, un intervalle annulaire (11) pour l'entrée de l'air dans la capsule (3, 3') étant formé entre la périphérie extérieure (14) de la paroi avant (6, 6') de la capsule et la paroi périphérique (12) de la capsule, une partie seulement de l'air de refroidissement fourni par le ventilateur (4, 30) traversant la capsule (3, 3'), caractérisé en ce que la paroi avant (6, 6') de la capsule est située principalement dans un plan perpendiculaire à l'axe (16) du ventilateur et est fixée au moteur à combustion interne (1, 28) par des éléments élastiques (7, 7') et en ce qu'au niveau de l'intervalle annulaire (11), on a du matériau d'isolation phonique (18, 18') sur la paroi périphérique (12) et/ou la paroi avant (6, 6') de la capsule.

2. Moteur à combustion interne, encapsulé selon la revendication 1, caractérisé en ce que la paroi avant (6) de la capsule est divisée suivant un plan (17) passant par l'axe (16) du ventilateur axial (14) (figures 1 et 2).

3. Moteur à combustion interne, encapsulé selon la revendication 1 ou 2, caractérisé en ce que l'intervalle annulaire (2) est traversé par les conduites d'eau de refroidissement (24, 25) du moteur à combustion interne (1) et/ou par les canaux (19, 20) par lesquels, de manière connue, l'air non réchauffé par le radiateur (5) est envoyé sur les pièces à refroidir particulièrement.

**Claims**

1. Encapsulated internal combustion engine (1, 28) for propelling motor vehicles, with a capsule (3; 3') which includes a front wall (6; 6') formed as an airflow guide wall and a peripheral wall (12), and a radiator (5) with a fan (4; 30) in the form of an axial blower arranged outside the capsule (3; 3') and in front of the front wall (6; 6') of the capsule, an annular gap (11) for entry of air into the capsule (3, 3') being formed between the outer periphery (14) of the front wall (6; 6') of the capsule and its peripheral wall (12) and only part of the cooling air delivered by the fan (4; 30) flowing through the capsule (3; 3'), characterised in that the front wall (6, 6') of the capsule lies substantially in a plane perpendicular to the axis (16) of the fan and is secured to the engine (1; 28) by resilient elements (7, 7') and that sound-absorbing material (18, 18') is applied to the peripheral wall (12) of the capsule and/or its front wall (6; 6') in the region of the annular gap (11).

2. Encapsulated engine according to claim 1, characterised in that the front wall (6) of the capsule is split in a plane (17) containing the axis (16) of the axial fan (14) (Fig. 1 and 2).

3. Encapsulated engine according to claim 1 or 2 characterised in that coolant pipes (24, 25) for the engine (1) and/or conduits (19, 20), by means of which air which has not been heated by the radiator (5) can be conducted in a known manner to components needing to be particularly cooled, pass through the annular gap (11).

*Fig.1*

*Fig.2*

*Fig.3*